# EUROPÄISCHE PATENTSCHRIFT

(11) **EP 3 943 198 B1**
(45) Veröffentlichungstag und Bekanntmachung des Hinweises auf die Patenterteilung: **12.04.2023**
(21) Anmeldenummer: 21181049.4
(22) Anmeldetag: 23.06.2021
(51) Int. Cl.: B05C 5/02

(54) **AUFTRAGSVORRICHTUNG FÜR EINEN VISKOSEN KLEBSTOFF MIT DREHBARER DÜSE**
VISCOUS ADHESIVE APPLICATOR WITH ROTATABLE NOZZLE
DISPOSITIF D'APPLICATION D'UN ADHÉSIF VISQUEUX AU MOYEN D'UNE BUSE ROTATIVE

(30) Priorität: 17.07.2020 DE 102020119027
(43) Veröffentlichungstag der Anmeldung: 26.01.2022
(73) Patentinhaber: EXEL Industries S.A., 51200 Epernay (FR)
(72) Erfinder: Schmitz, Markus, 75009 Paris (FR)
(74) Vertreter: Keenway Patentanwälte Neumann Heine Taruttis

(56) Entgegenhaltungen:
- CN-B- 105 772 329
- DE-A1-102007 036 585
- JP-A- H01 184 063

## Beschreibung

Gegenstand der vorliegenden Erfindung ist eine Auftragsvorrichtung für einen viskosen Klebstoff mit drehbarer Düse, die Verwendung einer entsprechenden Auftragsvorrichtung für den Auftrag von Klebstoff und ein entsprechendes Verfahren zum Auftragen von viskosem Klebstoff. Bevorzugt wird die Erfindung zum Auftragen von Polyurethan basiertem Klebstoff auf einer Scheibe, insbesondere einer Windschutzscheibe, eingesetzt.

Aus JP H01 184063 A, CN 105 772 329 B oder DE 10 2007 036585 A1 sind Auftragsvorrichtungen bekannt.

Kleben wird als stoffschlüssiges Fügeverfahren in einer Vielzahl von Anwendungen eingesetzt, beispielsweise vermehrt im Bau von Kraftfahrzeugen, bei denen beispielsweise sowohl Karosseriebauteile als auch Scheiben wie Windschutzscheiben mit anderen Bauteilen verklebt werden. Oftmals werden hier Klebstoffe wie beispielsweise Polyurethan basierte Klebstoffe eingesetzt, die mit Wasser reagieren und aushärten. Um eine Aushärtung des Klebstoffs an ungewollter Stelle zu verhindern, wird oftmals apparativ ein hoher Aufwand betrieben, um das Eindringen von Wasser beispielsweise auch als Luftfeuchtigkeit mit der Umgebungsluft, möglichst zu verhindern.

Hiervon ausgehend liegt der vorliegenden Erfindung die Aufgabe zugrunde, die aus dem Stand der Technik bekannten Nachteile zumindest teilweise zu überwinden und insbesondere eine Auftragsvorrichtung für einen viskosen Klebstoff anzugeben, die mit apparativ einfachen Mitteln das Eindringen von Luftfeuchtigkeit in die Auftragsvorrichtung sicher verhindert.

Die Aufgabe wird gelöst mit den Merkmalen der unabhängigen Ansprüche. Die jeweiligen abhängen Ansprüche sind auf vorteilhafte Weiterbildungen gerichtet.

Die erfindungsgemäße Auftragsvorrichtung für einen viskosen Klebstoff umfasst einen Grundkörper mit einer ersten Zuführung für einen viskosen Klebstoff und einen Düsenkörper, der um eine Achse gegenüber dem Grundkörper drehbar ist und der einen Teilbereich des Grundkörpers radial außen in Bezug auf die Achse umgibt. Der Düsenkörper weist einen Düsenkanal auf, der an einem ersten Ende eine Düsenöffnung zum Austragen des Klebstoffs aus der Auftragsvorrichtung und an einem zweiten Ende einen Eintritt aufweist. Das zweite Ende ist dabei das andere Ende des Düsenkanals, bezogen auf die Düsenöffnung. Düsenkörper und Grundkörper sind so ausgerichtet, dass über eine Mündung der ersten Zuführung Klebstoff in den Eintritt des Düsenkanals und damit in den Düsenkanal förderbar ist, wobei eine erste dynamische Dichtung den Grundkörper umgibt, die mit einer Innenseite an einer Außenwand des Grundkörpers und mit einer Außenseite an einer Innenwand des Düsenkörpers anliegt.

Eine Trennmittelkammer ist ausgebildet, die den Grundkörper in Umfangsrichtung umgibt und die radial innen von der Außenwandung des Grundkörpers, und radial außen von der Innenwand des Düsenkörpers begrenzt ist. Im Grundkörper ist eine zweite Zuführung für Trennmittel ausgebildet, die fluidtechnisch mit der Trennmittelkammer zur Zuführung von Trennmittel verbunden ist. Die erste dynamische Dichtung ist in Richtung der Achse zwischen der Trennmittelkammer und dem Eintritt des Düsenkanals des Düsenkörpers ausgebildet.

Unter einer radialen Außenfläche wird eine Außenfläche des Zuleitungsfortsatzes oder des Grundkörpers im Bereich der Trennmittelkammer verstanden, die sich in Umfangsrichtung erstreckt, bevorzugt eine Zylinderfläche, die radial betrachtet außen liegt. Unter einer radial inneren Oberfläche des Düsenkörpers wird eine Oberfläche verstanden, die sich in Umfangsrichtung bezogen auf die Achse erstreckt, bevorzugt eine Zylinderfläche, die radial betrachtet innen liegt. Als Trennmittel wird eine hydrophobe, bevorzugt viskose, Substanz eingesetzt. Bevorzugt wird als Trennmittel ein Fett und/oder ein Öl eingesetzt, welches eine Trennschicht und damit eine Sperre für Wasser bildet, so dass das Trennmittel in der Trennmittelkammer das Eindringen von Luft mit Luftfeuchtigkeit durch die Dichtstellen der ersten dynamischen Dichtung verhindert beziehungsweise zumindest deutlich verlangsamt. Als Trennmittel wird bevorzugt ein Schmierfett eingesetzt, insbesondere umfassend mindestens ein Paraffin, mindestens ein Olefin, mindestens ein gesättigtes Naphten, mindestens ein teilweise ungesättigtes Naphten und/oder mindestens einen Aromaten. Alternativ oder zusätzlich wird ein Alkansulfonsäurephenylester, insbesondere ein (C₁₀-C₂₁) Alkansulfonsäurephenylester, als Trennmittel eingesetzt.

Der Klebstoff ist eine viskose Flüssigkeit mit Viskositäten, die höher sind als die von Wasser bei einer Temperatur von 21°C. Als Klebstoff wird bevorzugt ein hydrophiler Klebstoff, insbesondere ein Polyurethan basierter Klebstoff, eingesetzt. Besonders bevorzugt wird die Auftragsvorrichtung zum Auftragen von feuchtigkeitshärtenden einkomponentigen Polyurethanklebstoffen, insbesondere für dauerelastische Scheiben- und Strukturverklebungen (auch mit mindestens einer weiteren Komponente wie beispielsweise einer Booster Komponente) eingesetzt. Der Klebstoff ist bevorzugt thixotrop, so dass der Klebstoff nach Auftrag zunächst formstabil ist, sich beim Verpressen der zu verklebenden Bauteile verformt und dann bis zur Aushärtung des Klebstoffes wieder seine Form behält. Dies ist insbesondere beim Verkleben von fragilen Bauteilen wie beispielsweise Glas- und/oder Kunststoffscheiben, insbesondere im Automobilbau, vorteilhaft.

In einer Ausführungsform kann ein Zuleitungsfortsatz ausgebildet sein, der einen Endbereich des Grundkörpers bildet nur die erste Zuleitung umfasst, nicht die zweite Zuleitung oder die Ableitung, so dass die erste Zuleitung die zweite Zuleitung und die Ableitung überragt. In diesem Beispiel ist eine Mündung der ersten Zuführung im Bereich des Zuleitungsfortsatzes auszubilden. So ist es möglich, dass durch die zweite Zuleitung zugeführte Trennmittel in die Trennmittelkammer einzubringen. Dadurch wird die erste dynamische Dichtung durch das Trennmittel in der Trennmittelkammer wirksam gegen das Eindringen von Luft mit der entsprechenden Luftfeuchtigkeit geschützt. Der Düsenkörper rotiert im Betrieb relativ zum Grundkörper, der Klebstoff wird über die erste Zuleitung im Grundkörper in den Düsenkörper, insbesondere in einen Düsenkanal des Düsenkörpers gefördert, aus dem der Klebstoff in eine Düse geleitet wird und durch eine Düsenöffnung wieder austritt. Daher genügt die Ausbildung der ersten dynamischen Dichtung als einzige dynamische Dichtung, um die einzige Schnittstelle, über die durch die rotierende Ausführung des Düsenkörpers relativ zum Grundkörper Luft an der Klebstoff herangeführt werden kann, abzudichten. Dies ermöglicht eine apparativ einfache Ausgestaltung der Auftragsvorrichtung bei gleichzeitig hoher Prozesssicherheit gegenüber einem unerwünschten Aushärten des Klebstoffs.

Durch die Drehbarkeit des Düsenkörpers gegenüber dem Grundkörper kann der Austrag, insbesondere im Hinblick auf die Richtung des Austrags, von Klebstoff angepasst werden. Oft muss ein Bereich eines Bauteils mit Klebstoff versehen werden, beispielsweise, wenn ein erstes Bauteil in einem bestimmten Anbindungsbereich mit einem zweiten Bauteil verbunden werden soll. Hier ist im Anbindungsbereich eines der Bauteile der Klebstoff aufzutragen, worauf dann erstes Bauteil und zweites Bauteil im Anbindungsbereich so in Kontakt gebracht werden, dass dort durch den Klebstoff eine stoffschlüssige Verbindung zwischen erstem Bauteil und zweitem Bauteil erzeugt wird. Hierzu ist es üblicherweise notwendig, eine Fläche im Anbindungsbereich mit einer Kleberraupe zu versehen. Um diese auszubilden, muss die Auftragsvorrichtung relativ zum Bauteil bewegt werden. Um eine definierte Kleberraupe ausbilden zu können, ist jeweils eine bestimmte Ausrichtung der Düsenöffnung notwendig, insbesondere muss die Düsenöffnung des Düsenkörpers entgegengesetzt zur Bewegungsrichtung der Auftragsvorrichtung zum Bauteil ausgerichtet sein. Dies wird durch die Rotierbarkeit des Düsenkörpers relativ zum Grundkörper ermöglicht.

Die Auftragsvorrichtung kann dabei sowohl an einem Stativ befestigt sein, wobei sich das Bauteil relativ zum Stativ und damit zur Auftragsvorrichtung bewegt, als auch an einem Manipulator- oder Roboterarm montiert sein, der eine Bewegung der Auftragsvorrichtung relativ zum Bauteil ermöglicht. Die Rotation des Düsenkörpers relativ zum Grundkörper wird dabei durch einen entsprechenden Antrieb gewährleistet. Da beispielsweise ein Bauteil einer komplexen Geometrie mit Klebstoff versehen werden muss, ist es vorteilhaft, wenn dieser Antrieb eine Rotation in einem weiten Winkelbereich, beispielsweise von bis zu 360°, insbesondere von bis zu 450° ermöglicht.

Vorteilhaft ist im Grundkörper eine Abführung ausgebildet, die in fluidtechnischer Verbindung mit der Trennmittelkammer steht. Mit der Abführung ist es somit möglich, Trennmittel aus der Trennmittelkammer abzuführen. Dies kann kontinuierlich oder diskontinuierlich erfolgen und ermöglicht also einerseits das kontinuierliche Spülen der Trennmittelkammer mit frischem Trennmittel und andererseits auch einen diskontinuierlichen Austausch von Trennmittel in der Trennmittelkammer, wenn dieses beispielsweise für eine gewisse Zeit in der Trennmittelkammer gestanden hat. So kann die Ansammlung von Verschmutzungen im Trennmittel vermieden werden.

Bevorzugt verläuft die Abführung parallel zur Achse. Dies ermöglicht einen kompakten Aufbau des Grundkörpers mit Abführung. Ebenso ist es bevorzugt, wenn mindestens eine der folgenden Zuführungen: a) die erste Zuführung und b) die zweite Zuführung parallel zur Achse verlaufen. Auch dies ermöglicht einen kompakten Aufbau des Grundkörpers. Die kompakte Ausführung des Grundkörpers ermöglicht eine gewichtsreduzierte Ausbildung der Auftragsvorrichtung, die dann geringere Anforderungen an die sie bewegende Mechanik, beispielsweise einen Manipulator- oder Roboterarm, stellt.

Bevorzugt ist eine zweite dynamische Dichtung auf einer Seite der Trennmittelkammer ausgebildet, die der zur ersten dynamischen Dichtung gewandten Seite der Trennmittelkammer entgegengesetzt ist. Durch die zweite dynamische Dichtung wird das Austreten von Trennmittel aus der Trennmittelkammer verhindert.

Bevorzugt ist mindestens eine der folgenden Dichtungen: a) die erste dynamische Dichtung und b) die zweite dynamische Dichtung als O-Ring oder, bevorzugt, als Rotationsdichtung ausgebildet.

Unter einer Rotationsdichtung wird insbesondere eine Dichtung verstanden, durch die ein rotierendes Bauteil wie hier der Düsenkörper von einem anderen Bauteil, welches nicht rotiert oder mit einer anderen Rotationsfrequenz rotiert, wie hier der Grundkörper, bestimmungsgemäß abgedichtet werden kann. Unter einer Rotationsdichtung wird insbesondere auch ein Radialwellendichtring, ein Axialwellendichtring, eine Gleitringdichtung und/oder eine berührende Schutzdichtung, beispielsweise ein Filzring, eine Dichtscheibe, Kolbenringe, ein V-Ring, eine Axialwellendichtung, eine Stangendichtung, eine Kolbendichtung und/oder ein Abstreifer.

Besonders bevorzugt ist mindestens eine der genannten dynamischen Dichtungen als ein V-Ring mit Bund ausgebildet. Dieser lässt sich durch Einklemmen seines Bundes so fixieren, dass er genauso rotieren muss, wie der Düsenkörper. Somit entsteht zwischen Grundkörper und Dichtung eine einzige Bewegungsstelle. Üblicherweise entstehen im Bereich der Dichtstelle keine hohen Drücke. In diesem Falle dichtet der V-Ring durch die eigene Vorspannung (meist durch eine Metallfeder aufgebracht), ab. Sollte es zu einer Verstopfung der Düse kommen, kann der Druck höher werden. Dies kann die Dichtung bewältigen, da der anstehende Klebstoffdruck auch die Anpresskraft der Dichtung an die äußeren Bauteile verstärkt.

Weiterhin wird eine Verwendung einer Auftragsvorrichtung nach der vorliegenden Erfindung zum Auftragen von Klebstoff auf eine zu klebende Oberfläche vorgeschlagen. Bevorzugt umfasst der Klebstoff einen Polyurethan-basierten Klebstoff.

Weiterhin wird ein Verfahren zum Auftragen eines Klebstoffs auf eine Scheibe, insbesondere eine Windschutzscheibe, vorgeschlagen mit einer Auftragsvorrichtung nach der vorliegenden Erfindung, bei dem über die erste Zuführung Klebstoff in den Düsenkanal und durch eine Düsenöffnung aus diesem heraus auf die Scheibe gefördert wird und durch eine Relativbewegung der Auftragsvorrichtung zur Scheibe in einer Bewegungsrichtung eine Klebstoffraupe auf der Scheibe erzeugt wird, wobei der Düsenkörper relativ zum Grundkörper der Auftragsvorrichtung jeweils so gedreht wird, dass die Düsenöffnung entgegengesetzt zur Bewegungsrichtung ausgerichtet ist.

Bevorzugt umfasst der Klebstoff einen Polyurethanbasierten Klebstoff. Insbesondere ist der Klebstoff ein thixotroper und unter Zuhilfenahme von Luftfeuchtigkeit oder Boosterkomponente härtender Klebstoff. Bevorzugt handelt es sich bei der Scheibe um eine Scheibe zum Einsatz im Automobilbau, insbesondere als Fensterscheibe. Bevorzugt ist die Scheibe eine Windschutzscheibe, die Scheibe eines Seitenfensters oder eine Heckscheibe eines Kraftfahrzeugs.

Mit dem erfindungsgemäßen Verfahren ist es möglich, einen definierten Klebstoffauftrag auf Scheiben auch komplexer Geometrien, insbesondere im Randbereich der Scheibe zur Verklebung mit anderen Bauteilen, beispielsweise Karosseriebauteilen, zu erreichen und so eine definierte stoffschlüssige Verbindung mit anderen Bauteilen zu erreichen.

Die Erfindung, sowie das technische Umfeld werden nachfolgend anhand der Figuren näher erläutert. Es ist darauf hinzuweisen, dass die Erfindung durch die gezeigten Ausführungsbeispiele nicht beschränkt werden soll. Die Erfindung wird durch die Ansprüche definiert. Insbesondere ist es, soweit nicht explizit anders dargestellt, auch möglich, Teilaspekte der in den Figuren erläuterten Sachverhalte zu extrahieren und mit anderen Bestandteilen und/oder Erkenntnissen aus anderen Figuren und/oder der vorliegenden Beschreibung zu kombinieren. Es zeigen schematisch:
- Fig. 1: einen ersten Querschnitt durch ein Beispiel einer Auftragsvorrichtung;
- Fig. 2: einen zweiten Querschnitt durch das Beispiel der Auftragsvorrichtung;
- Fig. 3: ein Detail des Beispiels einer Auftragsvorrichtung; und
- Fig. 4: ein Beispiel eines Auftrags eines Klebstoffs auf eine Windschutzscheibe.

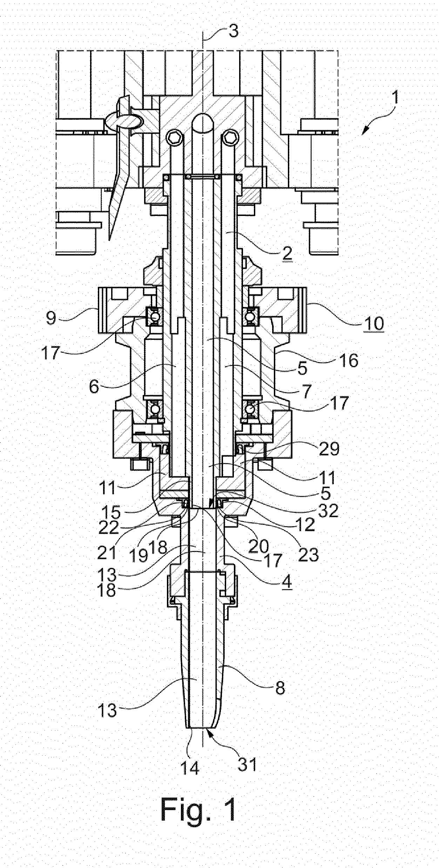

Fig. 1 zeigt einen ersten Querschnitt durch ein Beispiel einer Auftragsvorrichtung 1 für viskosen Klebstoff. Die Auftragsvorrichtung 1 umfasst einen Grundkörper 2 und einen um eine Achse 3 gegenüber dem Grundkörper 2 rotierbaren Düsenkörper 4. Der Grundkörper 2 enthält sämtliche Zuleitungen für zum Betrieb der Auftragsvorrichtung 1 notwendige Medien. Im vorliegenden Beispiel wird ein Ein-Komponenten-Klebstoff, insbesondere ein Polyurethanbasierter Klebstoff, eingesetzt, welcher über eine erste Zuführung 5 durch den Grundkörper 2 an den Düsenkörper 4 geführt wird. Im Falle eines Zwei-Komponenten Klebstoffs weist der Grundkörper 2 zwei erste Zuführungen 5 auf (hier nicht gezeigt), die die einzelnen Komponenten des Klebstoffs an den Düsenkörper 4 führen. Die erste Zuführung 5 erstreckt sich im vorliegenden Beispiel in Richtung der Achse 3 zentral im Grundkörper 2 und ist fluchtend mit dem Düsenkörper 4 ausgerichtet. Der Grundkörper 2 weist weiterhin eine zweite Zuführung 6 auf, die sich ebenfalls in Richtung der Achse 3 erstreckt und damit parallel zur ersten Zuführung 5 verläuft. Über die zweite Zuführung 6 wird ein Trennmittel, insbesondere ein Fett, zugeführt. Verbrauchtes Trennmittel wird über eine Abführung 7 abgeführt. Die Abführung 7 ist parallel zur Achse 3 ausgerichtet.

Der Düsenkörper 4 weist eine austauschbare Düse 8 auf, die an den Anwendungsfall anpassbar ist und die leicht austauschbar ist. Die Schnittstelle zwischen Düse 8 und dem Rest des Düsenkörpers 4 ist statisch abgedichtet und so gestaltet, dass hier keine Luft von außen in den Düsenkanal 13 eintreten kann. Der Düsenkörper 4 weist einen Düsenkanal 13 auf, der sich auch in die Düse 8 und durch diese hindurch erstreckt, über den der Klebstoff zu einer Düsenöffnung 14 der Düse 8 geführt und durch diese ausgetragen wird. Der Düsenkörper 4 erstreckt sich in Richtung der Achse 3 über einen Teilbereich des Grundkörpers 2 und umgibt diesen Teilbereich koaxial. Der Düsenkörper 4 ist mit einem Zahnrad 9 verbunden, welches Teil eines Antriebs 10 ist, durch den der Düsenkörper 4 gegenüber dem Grundkörper 2 um die Achse 3 rotierbar ist.

Der Düsenkörper 4 weist eine Trennmittelkammer 11 auf, die mit dem Düsenkörper 4 rotierbar ist. Im Betrieb ist die Trennmittelkammer 11 mit dem Trennmittel gefüllt. Hierzu mündet die zweite Zuführung 6 in die Trennmittelkammer 11. Verbrauchtes Trennmittel kann über die Abführung 7, die ebenfalls mit der Trennmittelkammer 11 verbunden ist, wieder abgeführt werden. Hierbei ist es möglich, die Trennmittelkammer 11 vor Beginn des Betriebs der Auftragsvorrichtung 1 zu füllen und die Füllung der Trennmittelkammer 11 diskontinuierlich zu erneuern, in dem frisches Trennmittel durch die zweite Zuführung 6 in die Trennmittelkammer 11 gedrückt wird und dadurch verbrauchtes Trennmittel aus der Trennmittelkammer 11 in die Abführung 7 gefördert wird. Alternativ kann im Betrieb der Auftragsvorrichtung 1 kontinuierlich Trennmittel über zweite Zuführung 6 in die Trennmittelkammer 11 und aus dieser in die Abführung 7 gefördert werden. Die Abführung 7 ist dabei mit einem hier nicht gezeigten Aufnahmebehälter für gebrauchtes Trennmittel verbunden. Ob ein kontinuierlicher oder diskontinuierlicher Füllvorgang der Trennmittelkammer 11 erfolgt, wird insbesondere in Abhängigkeit von den Anforderungen des Klebstoffs und der Anwendung entschieden.

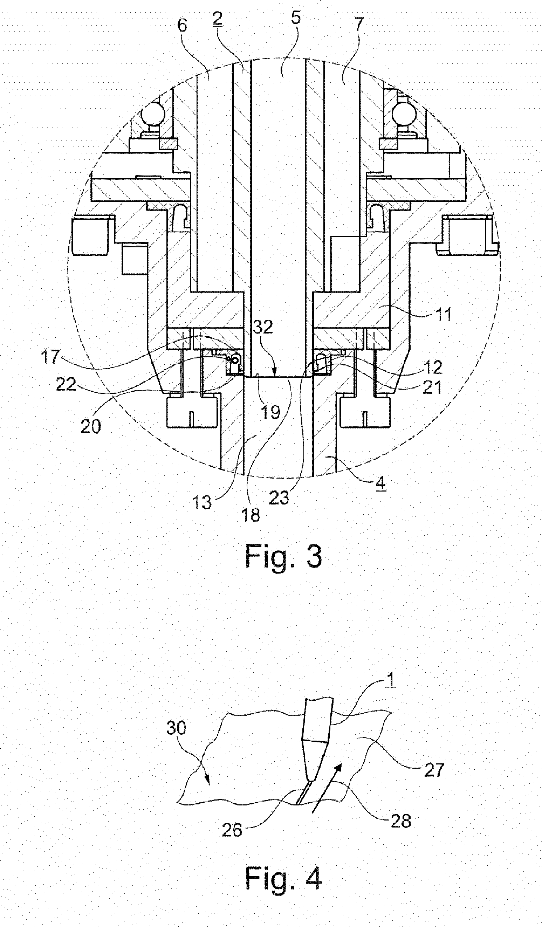

Der Düsenkörper 4 ist über eine erste dynamische Dichtung 12 gegenüber dem Grundkörper 2 abgedichtet. Die erste dynamische Dichtung 12 ist dabei insbesondere als Rotationsdichtung ausgebildet. Die erste dynamische Dichtung 12 umgibt dabei den Grundkörper 2 in diesem Beispiel im Bereich eines Zuleitungsfortsatzes 17, der einen Teil der ersten Zuführung 5 aufweist. Der Düsenkanal 13 weist an einem ersten Ende 31 eine Düsenöffnung 14 zum Austragen des Klebstoffs aus der Auftragsvorrichtung 1 und an einem zweiten Ende 32, welches dem ersten Ende 31 gegenüberliegt, einen Eintritt 19 auf, Düsenkörper 4 und Grundkörper 2 sind so ausgerichtet, dass über eine Mündung 18 der ersten Zuführung 5, die in diesem Beispiel im Zuleitungsfortsatz 17 ausgebildet ist, Klebstoff in den Eintritt 19 des Düsenkanals 14 förderbar ist. Bevorzugt und in diesem Beispiel sind Mündung 18 der ersten Zuführung 5 und Eintritt 19 des Düsenkanals 13 in einer Ebene senkrecht zur Achse 3 zumindest teilweise, bevorzugt vollständig, überlappend ausgebildet. Die erste dynamische Dichtung 12 liegt dabei mit einer Innenseite 20 an einer Außenfläche 21 des Grundkörpers 2 im Bereich des Zuleitungsfortsatzes 17 und mit einer Außenseite 22 an einer Innenwand 23 des Düsenkörpers 4 an (siehe hierzu im Detail Fig. 3). Im Betrieb wird Klebstoff durch die erste Zuführung 5 im Zuleitungsfortsatz 17 durch die Mündung 18 in den Eintritt 19 und damit in den Düsenkanal 13 gefördert.

Die erste dynamische Dichtung 12 ist dabei systembedingt nicht vollständig dicht und würde das Eindringen von Luft mit der entsprechenden Luftfeuchtigkeit durch die erste dynamische Dichtung 12 in den Düsenkanal 13 des Düsenkörpers 4 ermöglichen, so dass es zu einer unerwünschten Reaktion mit Klebstoff kommen könnte. Insbesondere PU-basierter Klebstoff ist hygroskopisch und härtet in Reaktion mit Wasser aus.

Um eine Aushärtung auf durch die Düsenöffnung 14 ausgetragenen Klebstoff zu beschränken und unerwünschte Aushärtungen zu verhindern, mündet die zweite Zuführung 6 in eine Trennmittelkammer 11, so dass über die zweite Zuführung 6 Trennmittel in die Trennmittelkammer 11 förderbar ist. Die erste dynamische Dichtung 12 ist dabei in Richtung der Achse 3 zwischen der Trennmittelkammer 11 und dem Düsenkanal 14 des Düsenkörpers 4 ausgebildet. Die Trennmittelkammer 11 liegt somit in dem einzigen Bereich, über den Luft an den Übergang von der ersten Zuführung 5 zum Düsenkanal 13 gelangen kann.

Die Trennmittelkammer 11 umgibt den Grundkörper 2 in Umfangsrichtung bezogen auf die Achse 3 vollständig und wird radial innen von einer Außenwandung 15 des Grundkörpers 2 und radial außen von einer Innenwand 23 des Düsenkörpers 4 begrenzt, so dass Trennmittel an der Außenwandung 15 des Grundkörpers 2 anliegt. Dieses verhindert das Eindringen von Luft hin zur ersten dynamischen Dichtung 12 und verhindert damit das Eindringen von Luft in den Düsenkanal 13. Somit können unerwünschte Aushärtungen im Düsenkanal 13 verhindert werden. Hierbei ist die erste dynamische Dichtung 12 die einzige Dichtung, die ein Eindringen von Luft in den Düsenkanal 13 verhindert. Die Trennmittelkammer 11 rotiert dabei mit dem Düsenkörper 4 um den Grundkörper 2.

Zwischen einer Mündung 18 der ersten Zuführung 5 im Zuleitungsfortsatz 17 und einem rotierbaren Eintritt 19 des Düsenkanals 13 (vgl. auch die Detailzeichnung in Fig. 3) ist die einzige Schnittstelle, über die Luft an den Klebstoff vor Austritt aus der Düsenöffnung 14 gelangen kann. Die erste dynamische Dichtung 12 ist dabei in Richtung der Achse 3 zwischen der Trennmittelkammer 11 und dem Eintritt 19 in den Düsenkanal 13 ausgebildet. Von daher bewirkt die dynamische Dichtung 12 im Zusammenspiel mit der Trennmittelkammer 11, dass keine Luft in Kontakt mit dem Klebstoff im Inneren des Düsenkörpers 4 kommt.

Der Düsenkörper 4 ist rotationsfest an einer Lagermanschette 16 befestigt, die einen Teilbereich des Grundkörpers 2 koaxial umgibt und die über Kugellager 17 am Grundkörper 2 gelagert ist. An der Lagermanschette 16 ist das Zahnrad 9 drehfest befestigt. Durch Betätigen des Zahnrades 9, beispielsweise durch ein weiteres, dieses kämmende, Zahnrad oder auch durch eine Zahnstange als Teil des Antriebs 10 wird die Lagermanschette 16 und dadurch der Düsenkörper 4 und damit die Düsenöffnung 14 gegenüber dem Grundkörper 2 verdreht. Hierdurch ist es möglich, beispielsweise beim Auftrag von Klebstoff auf eine Windschutzscheibe, den Düsenkörper 4 jeweils so zu drehen, dass die Düsenöffnung 14 optimiert an die Austragsrichtung des Klebstoffs auf der Windschutzscheibe ausgerichtet ist.

Die Auftragsvorrichtung 1 kann sowohl mit einem Manipulator- oder Roboterarm als auch mit einem Stativ verbunden sein.

Weiterhin ist eine zweite dynamische Dichtung 29 auf einer Seite der Trennmittelkammer 11 ausgebildet, die der zur ersten dynamischen Dichtung 12 gewandten Seite der Trennmittelkammer 11 entgegengesetzt ist. Durch die zweite dynamische Dichtung 29 wird das Austreten von Trennmittel aus der Trennmittelkammer 11 verhindert, und die Verschmutzung des Trennmittels in der Trennmittelkammer 11 zumindest verlangsamt. Hierdurch wird die Benutzung des Trennmittels in der Trennmittelkammer 11 für einen längeren Zeitraum möglich. Weiterhin wird durch die Verhinderung des Eintretens von Luft in das Trennmittel in der Trennmittelkammer 11 die Ansammlung von Feuchtigkeit im Trennmittel verlangsamt beziehungsweise reduziert.

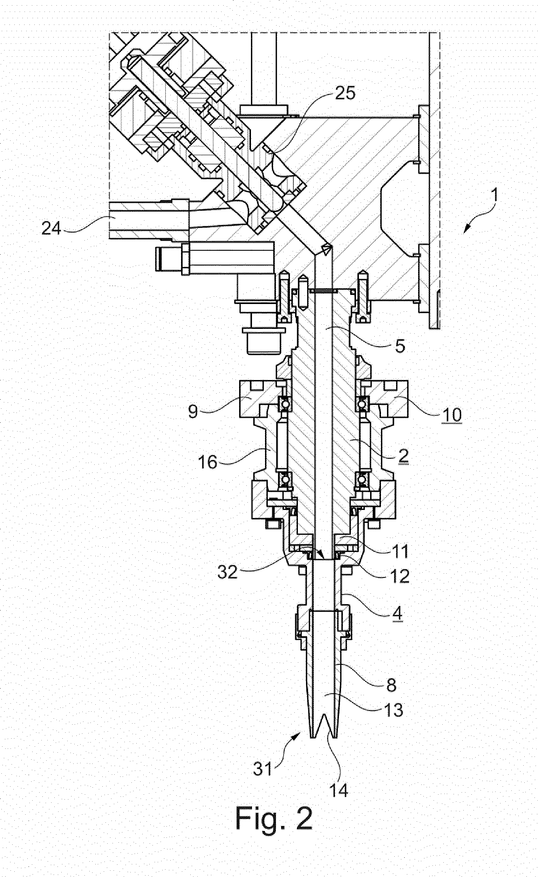

Fig. 2 zeigt einen zweiten Querschnitt des Beispiels der Auftragsvorrichtung 1. Hier wird zur Vermeidung von Wiederholungen auf die Beschreibung des ersten Querschnitts zu Fig. 1 verwiesen und nur die weiteren Details erläutert. Fig. 2 zeigt Zuleitung 24 für Klebstoff, über die Klebstoff über ein Ventil 25 der ersten Zuleitung 5 zuführbar ist. Die Düsenöffnung 14 weist einen dreieckigen Querschnitt auf, so dass eine Kleberraupe mit dreieckigem Querschnitt durch die Auftragsvorrichtung 1 auftragbar ist.

Fig. 3 zeigt einen Ausschnitt der Auftragsvorrichtung 1 in Vergrößerung mit der den Zuleitungsfortsatz 17 umgebenden ersten dynamischen Dichtung 12. Die erste dynamische Dichtung 12 liegt dabei mit einer Innenseite 20 an einer Außenfläche 21 des Zuleitungsfortsatzes 17 und mit einer Außenseite 22 an der Innenwand 23 des Düsenkörpers 4 an.

Fig. 4 zeigt sehr schematisch ein Beispiel des Auftrags von Klebstoff 26 auf eine Oberfläche 30 einer Windschutzscheibe 27 durch eine Auftragsvorrichtung 1. Hierbei wird die Auftragsvorrichtung 1 in einer Bewegungsrichtung 28 relativ zur Windschutzscheibe 27 bewegt. Der Düsenkörper 4 wird dabei relativ zum Grundkörper 2 so gedreht, dass die Düsenöffnung 14 (hier nicht eingezeichnet) entgegengesetzt zur Bewegungsrichtung 28 ausgerichtet ist. Zudem kann durch die Rotierbarkeit des Düsenkörpers 4 relativ zum Grundkörper 2 ein Nahtschluss erreicht werden, in dem das Ende der Raupe des Klebstoffs 26 mit dem Anfang der entsprechenden Raupe verbunden wird, wenn beispielsweise die Windschutzscheibe 27 über den gesamten Außenrand mit Klebstoff 26 versehen wird.

Die Auftragsvorrichtung 1 erlaubt den Auftrag von Polyurethanbasiertem Klebstoff auf eine Oberfläche, bei dem über das Zusammenwirken einer ersten dynamischen Dichtung 12 mit einer Trennmittelkammer 11, in der ein Trennmittel vorgehalten wird, das Eintragen von Luftfeuchtigkeit in den Klebstoff vor dem Austreten aus der Düsenöffnung 14 wirksam verhindert wird. Der dafür notwendige apparative Aufwand ist mit der Ausbildung einer ersten dynamischen Dichtung 12 und einer Trennkammer 11 gering.

### Bezugszeichen

- 1: Auftragsvorrichtung
- 2: Grundkörper
- 3: Achse
- 4: Düsenkörper
- 5: erste Zuführung
- 6: zweite Zuführung
- 7: Abführung
- 8: Düse
- 9: Zahnrad
- 10: Antrieb
- 11: Trennmittelkammer
- 12: erste dynamische Dichtung
- 13: Düsenkanal
- 14: Düsenöffnung
- 15: Außenwandung
- 16: Lagermanschette
- 17: Zuleitungsfortsatz
- 18: Mündung
- 19: Eintritt
- 20: Innenseite
- 21: Außenfläche
- 22: Außenseite
- 23: Innenwand
- 24: Zuleitung
- 25: Ventil
- 26: Klebstoff
- 27: Windschutzscheibe
- 28: Bewegungsrichtung
- 29: zweite dynamische Dichtung
- 30: Oberfläche
- 31: erstes Ende
- 32: zweites Ende

## Patentansprüche

1. Auftragsvorrichtung (1) für einen viskosen Klebstoff,
umfassend einen Grundkörper (2) mit einer ersten Zuführung (5) für einen viskosen Klebstoff und
einen Düsenkörper (4), der um eine Achse (3) gegenüber dem Grundkörper (2) drehbar ist und der einen Teilbereich des Grundkörpers (2) radial außen in Bezug auf die Achse (3) umgibt,
wobei der Düsenkörper (4) einen Düsenkanal (13) aufweist, der an einem ersten Ende (31) eine Düsenöffnung (14) zum Austragen des Klebstoffs aus der Auftragsvorrichtung (1) und an einem zweiten Ende (32) einen Eintritt (19) aufweist,
wobei Düsenkörper (4) und Grundkörper (2) so ausgerichtet sind, dass über eine Mündung (18) der ersten Zuführung Klebstoff in den Eintritt (19) des Düsenkanals (14) förderbar ist, wobei eine erste dynamische Dichtung (12) den Grundkörper (2) umgibt, die mit einer Innenseite (20) an einer Außenwand (15, 21) des Grundkörpers (2) und mit einer Außenseite (22) an einer Innenwand (23) des Düsenkörpers (4) anliegt,
**dadurch gekennzeichnet, dass**
eine Trennmittelkammer (11) ausgebildet ist, die den Grundkörper (2) in Umfangsrichtung umgibt und die radial innen von der Außenwandung (15, 21) des Grundkörpers (2) und radial außen von der Innenwand (23) des Düsenkörpers (4) begrenzt ist,
wobei im Grundkörper (2) eine zweite Zuführung (6) für Trennmittel ausgebildet ist, die fluidtechnisch mit der Trennmittelkammer (11) zur Zuführung von Trennmittel verbunden ist,
wobei die erste dynamische Dichtung (12) in Richtung der Achse (3) zwischen der Trennmittelkammer (11) und dem Eintritt (19) des Düsenkanals (13) des Düsenkörpers (4) ausgebildet ist,
wobei im Grundkörper (2) eine Abführung (7) ausgebildet ist, die in fluidtechnischer Verbindung mit der Trennmittelkammer (11) steht.

2. Auftragsvorrichtung (1) nach Anspruch 1, bei der die Abführung (7) parallel zur Achse verläuft.

3. Auftragsvorrichtung (1) nach einem der vorhergehenden Ansprüche, bei der mindestens eine der folgenden Zuführungen: a) die erste Zuführung (5) und b) die zweite Zuführung (6) parallel zur Achse (3) verlaufen.

4. Auftragsvorrichtung (1) nach einem der vorhergehenden Ansprüche, bei der eine zweite dynamische Dichtung (29) auf einer Seite der Trennmittelkammer (11) ausgebildet ist, die der zur ersten dynamischen Dichtung (12) gewandten Seite der Trennmittelkammer (11) entgegengesetzt ist.

5. Verwendung einer Auftragsvorrichtung (1) nach einem der vorhergehenden Ansprüche zum Auftragen von Klebstoff (26) auf eine zu klebende Oberfläche (30).

6. Verwendung nach Anspruch 5, bei der der Klebstoff (26) ein Polyurethanbasierten Klebstoff umfasst.

7. Verfahren zum Auftragen eines Klebstoffs(26) auf eine Scheibe, insbesondere eine Windschutzscheibe (27), mit einer Auftragsvorrichtung (1) nach einem der Ansprüche 1 bis 4, bei dem über die erste Zuführung (5) Klebstoff in den Düsenkanal (13) und durch eine Düsenöffnung (14) aus diesem heraus auf die Scheibe (27) gefördert wird und durch eine Relativbewegung der Auftragsvorrichtung (1) zur Scheibe (27) in einer Bewegungsrichtung(28) eine Klebstoffraupe (26) auf der Scheibe (27) erzeugt wird, wobei der Düsenkörper (4) relativ zum Grundkörper (2) der Auftragsvorrichtung (1) jeweils so gedreht wird, dass die Düsenöffnung (14) entgegengesetzt zur Bewegungsrichtung (28) ausgerichtet ist.

8. Verfahren nach Anspruch 7, bei dem der Klebstoff (26) einen Polyurethanbasierten Kleber umfasst.

9. Verfahren nach Anspruch 7 oder 8, bei dem als Klebstoff ein thixotroper, wasserhärtender Klebstoff eingesetzt wird.

## Claims

1. Application device (1) for a viscous adhesive,
comprising a base body (2) having a first inlet (5) for a viscous adhesive and
a nozzle body (4) which is rotatable about an axis (3) with respect to the base body (2) and which surrounds a portion of the base body (2) radially on the outside with respect to the axis (3),
wherein the nozzle body (4) has a nozzle channel (13) which has a nozzle opening (14) at a first end (31) for discharging the adhesive from the application device (1) and an inflow entry (19) at a second end (32),
wherein the nozzle body (4) and the base body (2) are aligned in such a way that adhesive can be conveyed into the inflow entry (19) of the nozzle channel (14) via an orifice (18) of the first inlet, wherein a first dynamic seal (12) covers the base body (2), which rests with an inner side (20) against an outer wall (15, 21) of the base body (2) and with an outer side (22) against an inner wall (23) of the nozzle body (4),
**characterized in that** a separating agent chamber (11) is formed which surrounds the base body (2) in the circumferential direction and which is delimited radially inside by the outer wall (15, 21) of the base body (2) and radially outside by the inner wall (23) of the nozzle body (4),
wherein a second inlet (6) for separating agent is formed in the base body (2), which is fluidically connected to the separating agent chamber (11) for feeding separating agent,
wherein the first dynamic seal (12) is formed in the direction of the axis (3) between the separating agent chamber (11) and the inflow entry (19) of the nozzle channel (13) of the nozzle body (4), wherein an outlet (7) is formed in the base body (2) and is in fluid communication with the separating agent chamber (11).

2. Application device (1) according to claim 1, wherein the outlet (7) runs parallel to the axis.

3. Application device (1) according to any of the preceding claims, wherein at least one of the following inlets: a) the first inlet (5) and b) the second inlet (6) run parallel to the axis (3).

4. Application device (1) according to any of the preceding claims, wherein a second dynamic seal (29) is formed on one side of the separating agent chamber (11) which is opposite the side of the separating agent chamber (11) facing the first dynamic seal (12).

5. Use of an application device (1) according to any of the preceding claims for applying adhesive (26) to a surface (30) to be bonded.

6. Use according to claim 5, wherein the adhesive (26) comprises a polyurethanebased adhesive.

7. Method for applying an adhesive (26) to a pane, in particular a windshield (27), with an application device (1) according to any of claims 1 to 4, wherein adhesive is fed into the nozzle channel (13) via the first inlet (5) and is conveyed out of this through a nozzle opening (14) onto the pane (27) and a bead of adhesive (26) is produced on the pane (27) by a movement of the application device (1) relative to the pane (27) in a direction of movement (28), wherein the nozzle body (4) is rotated relative to the base body (2) of the application device (1) in such a way that the nozzle opening (14) is oriented opposite to the direction of movement (28).

8. Method according to claim 7, wherein the adhesive (26) comprises a polyurethane-based adhesive.

9. Method according to either claim 7 or claim 8, wherein a thixotropic, water-hardening adhesive is used as the adhesive.

## Revendications

1. Dispositif d'application (1) pour un adhésif visqueux,
comprenant un corps de base (2) avec une première amenée (5) pour un adhésif visqueux et
un corps de buse (4) qui est rotatif autour d'un axe (3) par rapport au corps de base (2) et qui entoure une zone partielle du corps de base (2) radialement à l'extérieur par rapport à l'axe (3),
le corps de buse (4) présentant un canal de buse (13) qui présente à une première extrémité (31) une ouverture de buse (14) pour l'application de l'adhésif à partir du dispositif d'application (1) et à une deuxième extrémité (32) une entrée (19),
le corps de buse (4) et le corps de base (2) étant orientés de telle sorte que de l'adhésif peut être acheminé dans l'entrée (19) du canal de buse (14) par l'intermédiaire d'une embouchure (18) de la première amenée, un premier joint d'étanchéité dynamique (12) entourant le corps de base (2), qui repose par un côté intérieur (20) contre une paroi extérieure (15, 21) du corps de base (2) et par un côté extérieur (22) contre une paroi intérieure (23) du corps de buse (4), **caractérisé en ce que**
une chambre d'agent de séparation (11) est réalisée, qui entoure le corps de base (2) dans la direction périphérique et qui est délimitée radialement à l'intérieur par la paroi extérieure (15, 21) du corps de base (2) et radialement à l'extérieur par la paroi intérieure (23) du corps de buse (4),
une deuxième amenée (6) pour l'agent de séparation étant réalisée dans le corps de base (2), laquelle est reliée fluidement à la chambre d'agent de séparation (11) pour l'amenée d'agent de séparation,
le premier joint d'étanchéité dynamique (12) étant réalisé dans la direction de l'axe (3) entre la chambre d'agent de séparation (11) et l'entrée (19) du canal de buse (13) du corps de buse (4),
une évacuation (7) étant réalisée dans le corps de base (2), laquelle est en liaison fluidique avec la chambre d'agent de séparation (11).

2. Dispositif d'application (1) selon la revendication 1, dans lequel l'évacuation (7) s'étend parallèlement à l'axe.

3. Dispositif d'application (1) selon l'une quelconque des revendications précédentes, dans lequel au moins l'une des amenées suivantes : a) la première amenée (5) et b) la deuxième amenée (6) s'étend parallèlement à l'axe (3).

4. Dispositif d'application (1) selon l'une quelconque des revendications précédentes, dans lequel un deuxième joint d'étanchéité dynamique (29) est réalisé sur un côté de la chambre d'agent séparation (11) qui est opposé au côté de la chambre d'agent de séparation (11) qui est tourné vers le premier joint d'étanchéité dynamique (12).

5. Utilisation d'un dispositif d'application (1) selon l'une quelconque des revendications précédentes pour l'application d'adhésif (26) sur une surface (30) à coller.

6. Utilisation selon la revendication 5, dans laquelle l'adhésif (26) comprend un adhésif à base de polyuréthane.

7. Procédé d'application d'un adhésif (26) sur une vitre, notamment un pare-brise (27), avec un dispositif d'application (1) selon l'une quelconque des revendications 1 à 4, dans lequel, par l'intermédiaire la première amenée (5), de l'adhésif est acheminé dans le canal de buse (13) et, par une ouverture de buse (14), hors de celui-ci, sur la vitre (27) et, par un mouvement relatif du dispositif d'application (1) par rapport à la vitre (27) dans une direction de mouvement (28), un cordon d'adhésif (26) est produit sur la vitre (27), le corps de buse (4) étant tourné par rapport au corps de base (2) du dispositif d'application (1) de telle sorte que l'ouverture de buse (14) est orientée à l'opposé de la direction de mouvement (28).

8. Procédé selon la revendication 7, dans lequel l'adhésif (26) comprend une colle à base de polyuréthane.

9. Procédé selon la revendication 7 ou 8, dans lequel un adhésif thixotrope durcissant à l'eau est utilisé en tant qu'adhésif.
